# EUROPÄISCHE PATENTSCHRIFT

(11) **EP 0 943 024 B1**
(45) Veröffentlichungstag und Bekanntmachung des Hinweises auf die Patenterteilung: **29.01.2003**
(21) Anmeldenummer: 97951994.9
(22) Anmeldetag: 27.11.1997
(51) Int. Cl.: D03D 51/34

(54) **VERFAHREN ZUR OPTISCHEN ÜBERWACHUNG VON SCHUSSFÄDEN BEIM EINTRAGEN IN EIN WEBFACH UND EINEN SCHUSSWÄCHTER**
METHOD FOR THE OPTICAL MONITORING OF WEFT YARN PASSED INTO A WEAVING SHED AND A WEFT BREAK MOTION-STOP
PROCEDE DE CONTROLE OPTIQUE DE DUITES LORS DE L'INSERTION DANS UNE FOULE ET UN GARDE-DUITE

(30) Priorität: 02.12.1996 BE 9601003
(43) Veröffentlichungstag der Anmeldung: 22.09.1999
(73) Patentinhaber: Picanol N.V., 8900 Ieper (BE)
(72) Erfinder: VERHULST, Joseph, B-8902 Zillebeke (BE); PEETERS, Jozef, B-8900 Ieper (BE); VANDENABEELE, Frans, B-8980 Zonnebeke-Beselare (BE)
(74) Vertreter: Patentanwälte Ruff, Wilhelm, Beier, Dauster & Partner
(86) Internationale Anmeldenummer: EP9706627
(87) Internationale Veröffentlichungsnummer: WO98024957

(56) Entgegenhaltungen:
- EP-A- 0 137 380
- EP-A- 0 212 727
- DE-A- 4 007 215
- DE-A- 4 142 356
- US-A- 3 853 408

## Beschreibung

Die Erfindung betrifft ein Verfahren zum optischen Überwachen von Schussfäden beim Eintrag in ein Webfach mit quer zu einem Führungskanal auf eine Vielzahl lichtempfindlicher Elemente gerichteten, im wesentlichen zueinander parallelen Lichtstrahlen, wobei die Unterbrechung der Lichtstrahlen durch Schussfäden erfasst wird, und einen Schusswächter zum Durchführen des Verfahrens.

Es ist bekannt (US-Patent 3 853 408), quer zu einem Führungskanal für Schussfäden ein Bündel von zueinander parallelen Lichtstrahlen auf eine Vielzahl von in einer Reihe quer zum Führungskanal angeordnete lichtempfindliche Elemente zu richten. Die Unterbrechung der Lichtstrahlen zu den lichtempfindlichen Elementen aufgrund eines Schussfadens wird erfasst und mittels einer Auswerteeinrichtung so verarbeitet, dass das Vorhandensein eines Schussfadens erkannt wird.

Es ist auch bekannt (DE 41 42 356 A), ein Schussfadenüberwachungssystem für eine Webmaschine einzusetzen, bei welchem eine CCD-Kamera und eine zugehörige Auswerteeinrichtung angewandt werden. Mit diesem Überwachungssystem ist es möglich, die Position eines Schussfadens im Führungskanal eines Webblattes zu erkennen, sowie seine Dicke zu ermitteln. Der Aufwand für dieses Überwachungssystem ist jedoch sehr hoch.

Der Erfindung liegt die Aufgabe zugrunde, das Verfahren der eingangs genannten Art zu verbessern.

Diese Aufgabe wird dadurch gelöst, dass die Signale mehrerer Elemente ausgewertet werden, um die Position von wenigstens einem Schussfaden zu erfassen, die dieser beim Eintragen im Führungskanal hat.

Durch das erfindungsgemäße Verfahren ist es nicht nur möglich, das Vorhandensein eines Schußfadens zu erkennen, sondern vielmehr auch seine Position im Fadenführungskanal.

In Ausgestaltung der Erfindung wird vorgesehen, daß bei einem gleichzeitigen Eintragen von zwei oder mehr Schußfäden die Position aller Schußfäden und damit das Vorhandensein aller Schußfäden erfaßt wird.

In weiterer Ausgestaltung der Erfindung wird vorgesehen, daß die Position von Schußfäden zweifach oder mehrfach hintereinander während eines Eintragens erfaßt wird. Dadurch ist es nicht nur möglich, zu unterscheiden, ob wirklich ein Schußfaden eingetragen wurde, oder beispielsweise nur eine Fadenflocke oder ein Fadenstück sich durch den Führungskanal bewegt hat, sondern auch Änderungen der Position von Schußfäden im Führungskanal. Darüber hinaus ist es auch vorteilhaft, den Schußeintrag zu überprüfen, wenn zwei oder mehr Schußfäden gleichzeitig eingetragen werden. Da Schußfäden sich während des Eintragens in den Fadenführungskanal relativ zueinander bewegen, kann festgestellt werden, ob zwei oder mehr Schußfäden während eines der Erfassungsvorgänge nebeneinander liegen, d.h. zwei oder mehr Schußfäden vorhanden sind.

Um die Einstellung der Mittel zum Eintragen der Schußfäden zu erleichtern, wird in weiterer Ausgestaltung der Erfindung vorgesehen, daß die Position von Schußfäden während eines Eintragens und/oder Änderungen der Position von Schußfäden zur Anzeige gebracht werden. Dadurch ist es einer Bedienungsperson möglich, beispielsweise bei einer Luftwebmaschine die Funktion von Hauptblasdüsen und Hilfsblasdüsen so einzustellen, daß die Schußfäden in einem bestimmten Bereich des Führungskanals eingetragen werden.

Die Aufgabe wird bei einem Schußwächter dadurch gelöst, daß die Auswerteeinrichtung Mittel zum Bestimmen der Position aufgrund der Signale mehrerer Elemente enthält, die Schußfäden beim Eintragen in dem Führungskanal haben.

Weitere Merkmale und Vorteile der Erfindung ergeben sich aus der nachfolgenden Beschreibung der in den Zeichnungen dargestellten Ausführungsbeispielen.
- Fig. 1: zeigt in schematischer Darstellung einen Teil einer Webmaschine mit einem erfindungsgemäßen Schußwächter,
- Fig. 2: einen Schnitt entlang der Linie II-II der Fig. 1 in größerem Maßstab,
- Fig. 3: einen Schnitt entlang der Linie III-III der Fig. 2,
- Fig. 4: einen Schnitt entlang der Linie IV-IV der Fig. 3,
- Fig. 5: einen Ausschnitt eines Führungskanals mit einem Schußwächter und einem Schußfaden,
- Fig. 6: ein Diagramm der von einem Schußwächter empfangenen Signale ohne Schußfaden,
- Fig. 7: ein Diagramm der von einem Schußwächter empfangenen Signale mit einem Schußfaden,
- Fig. 8: einen Ausschnitt aus einem Führungskanal mit einem Schußwächter und zwei Schußfäden,
- Fig. 9: ein Diagramm der von einem Schußwächter von zwei Schußfäden empfangenen Signale,
- Fig. 10: einen Schnitt ähnlich Fig. 2 durch eine abgewandelte Ausführungsform eines Schußwächters,
- Fig. 11 bis 13: Diagramme der vom Schußwächter nach Fig. 10 empfangenen Signale im Zustand ohne Schußfaden, mit einem Schußfaden und mit zwei Schußfäden und
- Fig. 14: einen Schnitt ähnlich Fig. 2 durch eine weitere Ausführungsform eines erfindungsgemäßen Schußwächters.

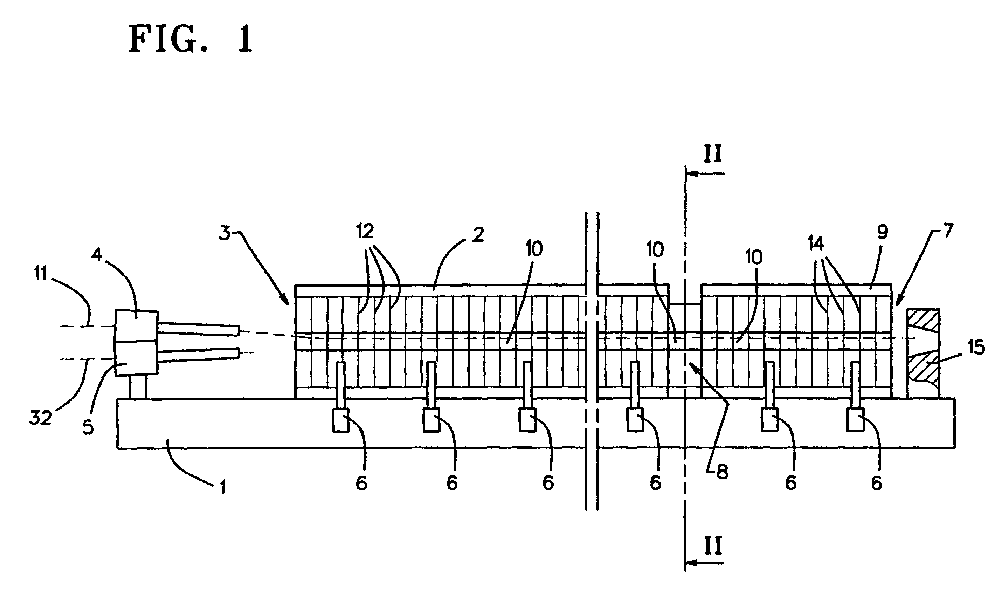

In Fig. 1 ist von einer Webmaschine eine Weblade 1 dargestellt, auf der ein Webblatt 2 angeordnet ist. Auf der Eintragsseite 3 befinden sich zwei Hauptblasdüsen 4, 5. Desweiteren sind entlang des Webblattes 2 auf der Weblade 1 mehrere Hilfsblasdüsen 6 angeordnet. Auf der der Eintragsseite gegenüberliegenden Seite 7 ist in Verlängerung des Webblattes ein Schußwächter 8 angeordnet. Nach dem Schußwächter 8 folgt in Verlängerung des Webblattes 2 ein sogenanntes Hilfswebblatt 9, entlang dessen ebenfalls Hilfsblasdüsen 6 angeordnet sind.

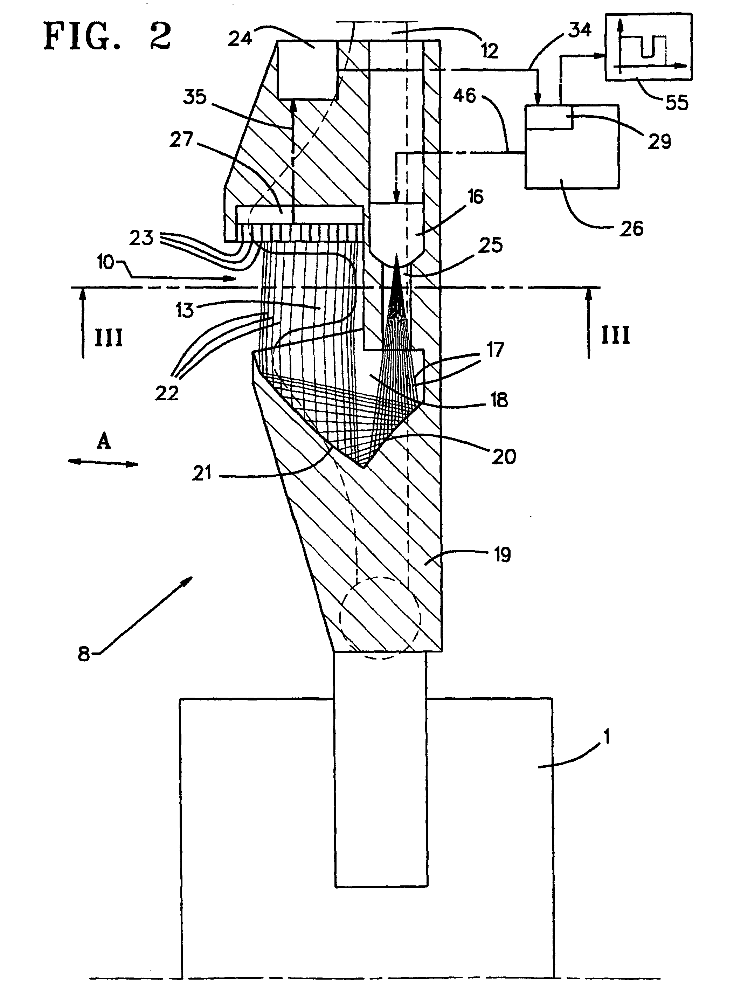

Die von den Hauptblasdüsen 4, 5 eingeblasenen Schußfäden 11, 32 werden innerhalb eines Führungskanals 10 von der Eintragsseite 3 zu der gegenüberliegenden Seite 7 geführt. Der Führungskanal 10, der auch in Fig. 2 zu sehen ist, wird von U-förmigen Ausschnitten von Lamellen 12 des Webblattes 2, einer Aussparung 13 des Schußwächters 8 und von U-förmigen Ausschnitten von Lamellen 14 des Hilfswebblattes 9 gebildet, die den Lamellen 12 des Webblattes 2 entsprechen. Die U-förmigen Ausschnitte der Lamellen 12 des Webblattes 2 und der Lamellen 14 des Hilfswebblattes 9 und die Aussparung 13 des Schußwächters 8 liegen in einer Linie hintereinander. Ein Schußfaden 11, 32 wird mittels der Hauptblasdüse 4 oder 5 und mittels der Hilfsblasdüsen 6 in bekannter Weise durch den Führungskanal 10 von der Eintragsseite 3 zur gegenüberliegenden Seite 7 geblasen. In Verlängerung nach dem Hilfswebblatt 9 ist üblicherweise noch eine sogenannte Streckdüse 15 auf der Weblade 1 angeordnet, um nach einem Eintrag den eingetragenen Schußfaden 11, 32 gestreckt zu halten.

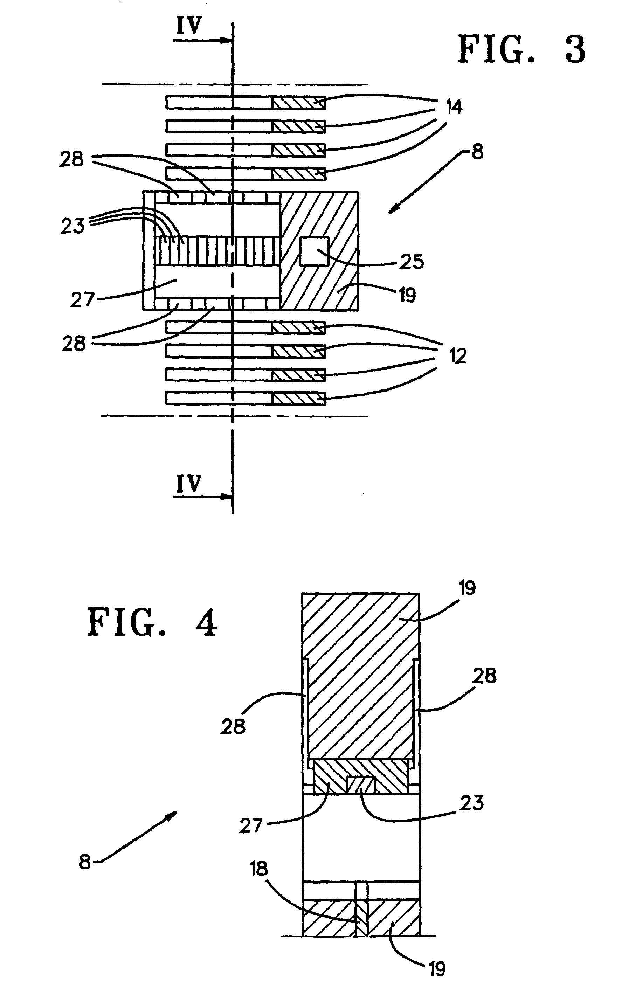

Der Schußwächter 8 entsprechend Fig. 2 bis 4 enthält eine Lichtquelle 16, die ein Bündel von Lichtstrahlen 17 erzeugt, die auf ein Prisma 18 gerichtet sind, das im Gehäuse 19 des Schußwächters 8 angeordnet ist. Die Lichtstrahlen werden über gekrümmte Spiegel 20, 21 von unten nach oben zur Aussparung 13 des Schußwächters 8 gelenkt, so daß sie in dem von der Aussparung 13 gebildeten Teil des Führungskanals 10 im wesentlichen von unten nach oben und im wesentlichen parallel zueinander verlaufen. Die Spiegel 20, 21 können aus gekrümmten Seitenflächen des Prismas 18 bestehen, auf denen ein spiegelnder Werkstoff angebracht ist. Das Gehäuse 19 ist vorzugsweise aus Kunststoff hergestellt, so daß das Prisma 18 eingegossen werden kann. Die Brechung des Prismas 18 und die Krümmung der Spiegel 20, 21 sind so gewählt, daß ein Feld von im wesentlichen parallelen Lichtstrahlen 22 erzeugt wird, das sich über die Tiefe (Pfeilrichtung A der Fig. 2) des Führungskanals 10 erstreckt.

Der Schußwächter 8 enthält weiter eine Vielzahl lichtempfindlicher Elemente 23 zum Empfangen der im wesentlichen zueinander parallelen Lichtstrahlen 22. Die lichtempfindlichen Elemente 23 sind im Bereich der oberen Begrenzung des Führungskanals 10 angeordnet und liegen im wesentlichen in einer Reihe, die sich quer zum Führungskanal 10 in Richtung seiner Tiefe erstreckt (Richtung A), so daß die Lichtstrahlen 22 die Elemente 23 treffen. Die lichtempfindlichen Elemente 23 sind an einen Verstärker 24 angeschlossen, der in dem Gehäuse 19 untergebracht ist. Die lichtempfindlichen Elemente 23 bestehen beispielsweise aus photoelektrischen Sensoren, die eine Spannung liefern, die proportional zu der Lichtstärke der auf sie auftreffenden Lichtstrahlen 22 ist.

Die Lichtquelle 16 besteht aus einer Lampe oder einer Leuchtdiode (LED), die im Gehäuse 19 untergebracht ist. Das Gehäuse 19 besitzt eine Öffnung 25, so daß die von der Lichtquelle 16 kommenden Lichtstrahlen 17 zum Prisma 18 gelangen. Die Lichtquelle 16 ist mittels einer elektrischen Leitung 46 an eine Steuereinheit 26 der Webmaschine angeschlossen, die auch die Signale des Verstärkers 24 empfängt und verarbeitet.

Mittels einer Auswahl einer geeigneten Krümmung für die beiden Spiegel 20, 21 kann ein Feld von Lichtstrahlen 22 erzielt werden, bei dem die Lichtstrahlen 22 nicht nur im wesentlichen parallel zueinander sind, sondern den Führungskanal über seine Breite mit im wesentlichen gleicher Lichtstärke ausfüllen. Hierzu können die Spiegel 20, 21 derart ausgelegt werden, daß sie die Randlichtstrahlen bei der Reflektion stärker bündeln.

Bei dem dargestellten Ausführungsbeispiel sind die lichtempfindlichen Elemente 23 in einer Reihe hintereinander in Richtung der Tiefe (Pfeilrichtung A) angeordnet, so daß sie das gesamte Feld an Lichtstrahlen 22 auffangen können. Sie sind nebeneinander in einer Halterung 27 montiert. Die Elemente 23 werden zusammen mit elektronischen Komponenten in der Halterung 27 vergossen, in der gleichzeitig elektrische Kontakte 28 vorgesehen sind, die elektrisch an die Elemente 23 angeschlossen sind und die mit elektrischen Leitungen 35 zu dem Verstärker 24 führen. Vom Verstärker 24 führen elektrische Leitungen 34 zur Steuereinheit 26. Die Halterung 27 ist beispielsweise an dem Gehäuse 19 mittels Klebens befestigt.

Der Schußwächter 8 arbeitet mit einer Auswerteeinrichtung 29 zusammen, um ein Diagramm der von den lichtempfindlichen Elementen 23 empfangenen Signale zu erstellen, so daß daraus die Position eines Schußfadens, d.h. die Position in Richtung der Tiefe des Führungskanals (Richtung A) eines Schußfadens im Bereich des Schußwächters 8 bestimmt werden kann. Die Auswerteeinrichtung 29 ist beispielsweise Bestandteil der Steuereinheit 26. Die elektrischen Leitungen 34 führen zu der Auswerteeinrichtung 29. An die Auswerteeinrichtung 29 ist eine Anzeigeeinrichtung 55 angeschlossen, in der die Position des oder der Schußfäden in einem Diagramm dargestellt ist, so daß eine Bedienungsperson die Position des oder der Schußfäden während der Durchführung von Einstellarbeiten überprüfen kann.

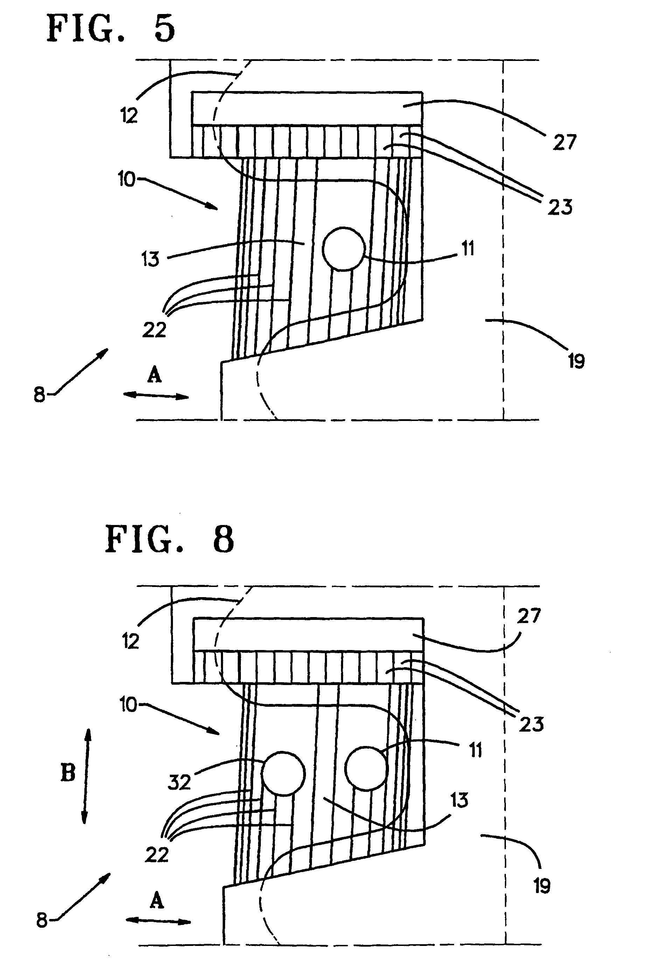

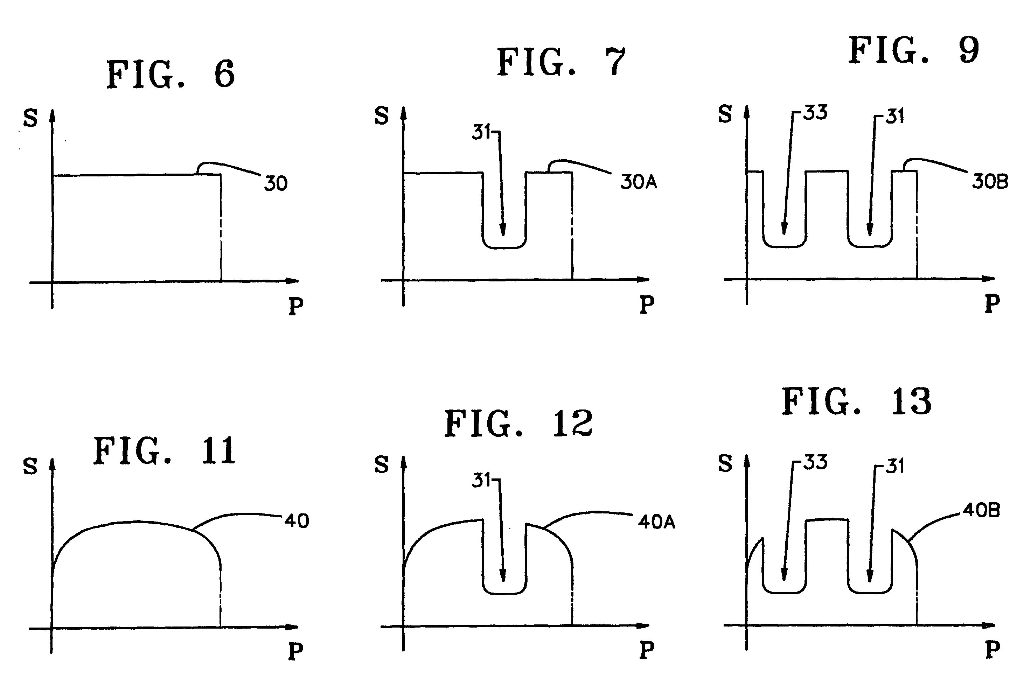

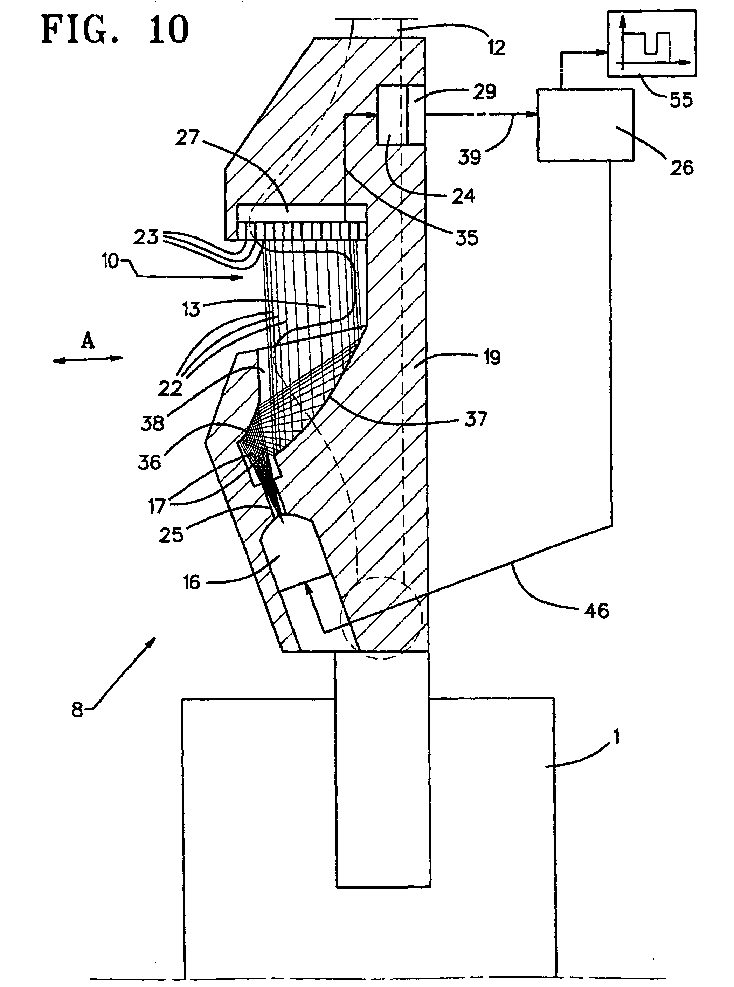

Die Verarbeitung der Signale der lichtempfindlichen Elemente 23 zum Bestimmen eines Diagramms entsprechend der Position eines Schußfadens im Führungskanal 10 im Bereich des Schußwächters 8 ist im einzelnen anhand Fig. 5 bis 9 erläutert. Die Diagramme zeigen das (verstärkte) Signal S über der Tiefe P des Führungskanals. Ohne Schußfaden ergibt sich das Diagramm 30 nach Fig. 6, das nahezu einer Geraden entspricht, da alle Lichtstrahlen empfangen werden, die fast die gleiche Lichtstärke haben. Obwohl die empfangenen Signale als eine durchgehende Linie dargestellt sind, bestehen sie tatsächlich aus einer Aneinanderreihung von kurzen Linien, deren Länge jeweils der Breite eines einzelnen Elementes 23 entspricht. Wenn beispielsweise zwanzig lichtempflindliche Elemente 23 nebeneinander angeordnet sind, so ergeben sich zwanzig entsprechend kurze Signalstrecken, die zusammen nahezu eine durchgehende Linie bilden. Die Breite der lichtempfindlichen Elemente 23 in Richtung der Tiefe des Führungskanals 10 (Richtung A) ist relativ gering. Sie beträgt weniger als der Durchmesser eines üblicherweise zu verarbeitenden Schußfadens.

Wenn im Bereich des Schußwächters 8 ein Schußfaden 11 oder 32 vorhanden ist, wird ein Teil des Feldes der Lichtstrahlen 22 unterbrochen, so daß die von dem Schußfaden 11, 32 abgedeckten lichtempfindlichen Elemente deutlich weniger Lichtstrahlen empfangen. Ein entsprechendes Diagramm 30A ist in Fig. 7 dargestellt. Es ist zu erkennen, daß im Bereich der Elemente 23, zu denen die Lichtstrahlen 22 von dem Schußfaden 11 oder 32 unterbrochen worden sind, die Lichtstrahlen 22 die lichtempfindlichen Elemente 23 nicht mehr auf direktem Weg erreichen, so daß das abgegebene Signal nur noch sehr schwach ist. Die Auswertung dieses Diagrammes 30A kann in der Weise erfolgen, daß der Abschnitt 31 ermittelt wird, in welchem das empfangene Signal deutlich schwächer ist als in den übrigen Bereichen. Jedes von einem der Elemente 23 abgegebene Signal wird mit dem von diesem Element 23 bei nicht vorhandenem Schußfaden verglichen. Ist das Signal geringer als das Signal bei nicht vorhandenem Schußfaden, so ist ein Schußfaden anwesend. Durch Auswerten, welches der Elemente 23 ein geringeres Signal abgibt, kann dann die Position des Schußfadens 11, 32 bestimmt werden, die er bezüglich der Tiefe des Führungskanals 10 einnimmt. Wenn kein schwächeres Signal empfangen wird, bedeutet das, daß sich im Bereich des Schußwächters 8 kein Schußfaden 11, 32 befindet.

Mit dem Schußwächter 8 und der Auswerteeinrichtung 29 kann mehrmals nacheinander die Position eines Schußfadens 11 oder 32 im Bereich des Schußwächters 8 bestimmt werden. Dadurch ist es möglich, die zeitliche Veränderung der Position des Schußfadens 11, 32 während eines Schußeintrages zu erkennen. Aus einer statistischen Auswertung, die beispielweise ebenfalls mit der Auswerteeinrichtung 29 durchgeführt wird, kann dann eine mittlere Position des Schußfadens 11 oder 32 bestimmt werden, sowie die Streuung, mit der ein Schußfaden 11 oder 32 gegenüber dieser mittleren Position seine Position verändert. In diesem Fall kann beispielsweise die Steuerung der Druckluftzufuhr zu den Hauptblasdüsen 4, 5 und den Hilfsblasdüsen 6 und/oder die Anordnung der Hilfsblasdüsen 6 experimentell so eingestellt werden, daß die Streuung so klein wie möglich wird. Dabei kann jeder Parameter verändert und der Einfluß dieser Veränderung auf die Streuung überprüft werden, um insgesamt das Eintragen der Schußfäden zu optimieren.

Der erfindungsgemäße Schußwächter 8 ist auch für Webmaschinen geeignet, bei welchen zwei oder mehr Schußfäden gleichzeitig in ein Webfach eingetragen werden. Beispielsweise wird vorgesehen, daß zwei Schußfäden 11, 32 jeweils mittels der ihnen zugeordneten Hauptblasdüsen 4, 5 in den Führungskanal 10 eingebracht und mit Hilfe der Hilfsblasdüsen 6 weiter durch den Führungskanal 10 geblasen werden. Wie beispielsweise in Fig. 8 dargestellt ist, befinden sich dann zwei Schußfäden 11, 32 im Bereich des Schußwächters 8 im Führungskanal 10. Daraus resultiert ein Diagramm 30B entsprechend Fig. 9, das zwei Abschnitte 31, 33 umfaßt, in denen das empfangene Signal deutlich schwächer als in den übrigen Bereichen ist. Die Auswertung des Diagramms 30B der empfangenen Signale kann in der Weise erfolgen, daß festgestellt wird, ob zwei voneinander unterscheidbare Abschnitte 31, 33 vorhanden sind, die das Vorhandensein von zwei Schußfäden 11, 32 anzeigen.

Da es vorkommen kann, daß sich die zwei Schußfäden 11, 32 im Bereich des Schußwächters 8 übereinander befinden, d.h. in einer Richtung B senkrecht zur Richtung A übereinander, könnte mit dem erfindungsgemäßen Schußwächter 8 dann nur das Vorhandensein eines Schußfadens erkannt werden. Da sich jedoch die Schußfäden 11, 32 unregelmäßig bewegen, d.h. sowohl in Richtung A als auch in Richtung B, wird es immer einen Zeitpunkt geben, zu welchem die Schußfäden 11, 32 nebeneinander liegen und somit zu zwei voneinander unterscheidbaren Abschnitten 31, 33 in dem Diagramm führen. Es wird deshalb die Position der Schußfäden mehrmals nacheinander überprüft, so daß eindeutig erkannt werden kann, daß zwei Schußfäden 11, 32 im Führungskanal vorhanden sind, nämlich dann, wenn ein oder mehrmals zwei voneinander verschiedene Abschnitte 31, 33 des Diagramms 30B festgestellt werden.

Die gleiche Arbeitsweise kann auch eingesetzt werden, wenn drei oder mehr Schußfäden gleichzeitig eingetragen werden. Dabei wird im Fall von drei Schußfäden geprüft, ob drei unterschiedliche Abschnitte in dem Diagramm vorhanden sind. Im Fall von vier Schußfäden wird geprüft, ob vier verschiedene Abschnitte im Diagramm vorhanden sind, usw.. Darüber hinaus ist es auch möglich, gleichzeitig die zeitliche Veränderung der Position von mehreren Schußfäden zu bestimmen, beispielsweise ihre Streuung um einen Mittelwert.

Da die Lichtstrahlen 22 im wesentlichen parallel zueinander verlaufen, ergibt sich der Vorteil, daß sich die von den lichtempfindlichen Elementen 23 empfangenen Signale dann sehr deutlich unterscheiden, wenn Schußfäden 11, 32 die Lichtstrahlen unterbrechen. Darüber hinaus bieten die im wesentlichen parallelen Lichtstrahlen 22 auch den Vorteil, daß die Position der Schußfäden 11, 32 in der Höhe des Führungskanals 10 (Richtung B in Fig. 2) nur wenig Einfluß auf die von den lichtempfindlichen Elementen 23 empfangenen Signale hat.

Bei der Ausführungsform nach Fig. 10 sind die lichtempfindlichen Elemente 23 des Schußwächters 8 oberhalb des Führungskanals 10 entsprechend der Ausführungsform nach Fig. 2 bis 4 angeordnet. Die Lichtstrahlen 17 der Lichtquelle 16 werden jedoch über Spiegel 36 und 37 umgelenkt und von unten nach oben durch den Führungskanal 10 hindurchgeschickt. Die Spiegel 36 und 37 sind in einer Aussparung 38 des Gehäuses 19 angeordnet. Die Auswerteeinrichtung 29 ist im Bereich des Verstärkers 24 im Gehäuse 19 angeordnet und über elektrische Leitungen 39 mit der Steuereinheit 26 verbunden. Die Funktionsweise des Schußwächters 8 entspricht derjenigen der Ausführungsform nach Fig. 2 bis 4.

Bei dem Ausführungsbeispiel nach Fig. 10 weist das Feld der Lichtstrahlen 22 eine unterschiedliche Lichtstärke über die Tiefe des Führungskanals 10 auf, so daß sich, wenn kein Schußfaden im Führungskanal 10 vorhanden ist, das Diagramm 40 entsprechend Fig. 11 ergibt. Wenn ein Schußfaden 11 oder 32 entsprechend Fig. 5 vorhanden ist, ergibt sich ein Diagramm 40A gemäß Fig. 12. Die Position des Schußfadens 11 oder 32 kann dadurch bestimmt werden, daß das Diagramm 40A nach Fig. 12 mit dem Diagramm 40 nach Fig. 11 verglichen wird. Wenn zwei Schußfäden 11, 32 vorhanden sind, ergibt sich ein Diagramm 40B nach Fig. 13. Auch hier kann die Position der Schußfäden 11, 32 dadurch bestimmt werden, daß das Diagramm 40B nach Fig. 13 mit dem Diagramm 40 nach Fig. 11 verglichen wird. Mit diesem Schußwächter 8 kann ebenfalls die Position der Schußfäden 11, 32 zu verschiedenen Zeitpunkten nacheinander bestimmt werden, so daß eine Streuung bezüglich einer mittleren Position oder das Vorhandensein von zwei Schußfäden 11, 32 erkannt werden kann.

Gemäß einer nicht dargestellten Variante sind die lichtempfindlichen Elemente 23 unterhalb des Führungskanals 10 angeordnet, während die von einer Lichtquelle kommenden Lichtstrahlen 22 so geführt werden, daß sie von oben durch den Führungskanal 10 hindurch zu den unten befindlichen lichtempfindlichen Elementen 23 laufen.

Es ist auch möglich, die Signale der lichtempfindlichen Elemente 23 direkt, d.h. ohne Zwischenschaltung eines Verstärkers 24, zur Auswerteeinrichtung 29 zu leiten.

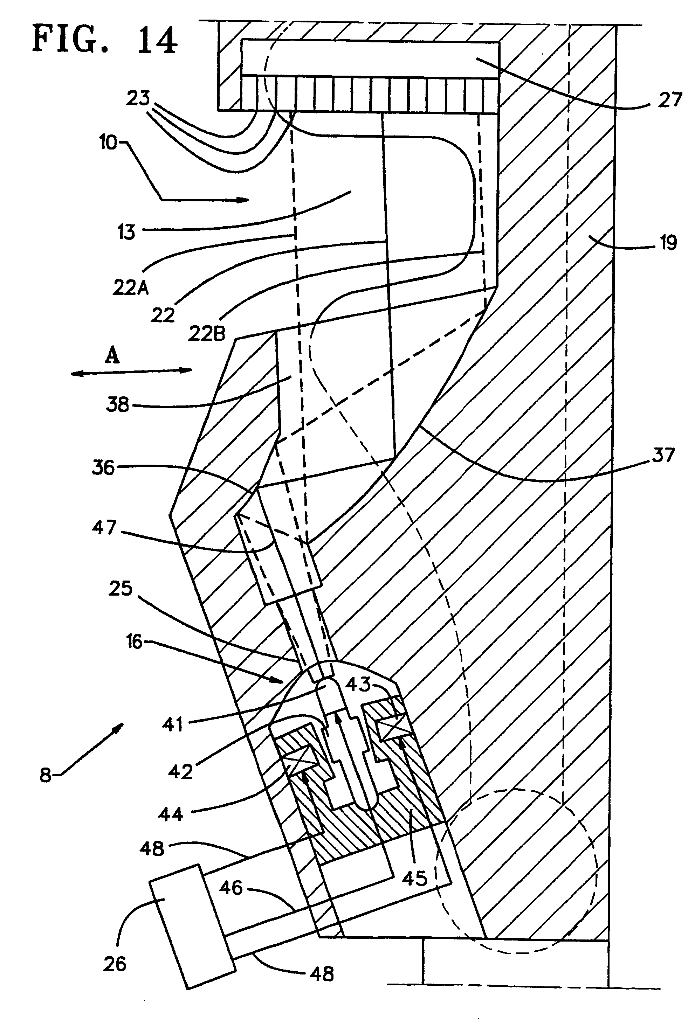

Bei dem Ausführungsbeispiel nach Fig. 14 ist ein Schußwächter 8 dargestellt, der als Lichtquelle eine Lampe 41 enthält, die einen gebündelten, fokussierten Lichtstrahl 47 abgibt. Die Lampe 41 ist mit einem Halter 42 versehen, so daß sie und der fokussierte Lichtstrahl 47 hin- und herbewegt werden können, um einen hin- und herlaufenden Lichtstrahl zu erzeugen. Der Halter 42 wirkt mit zwei Elektromagneten 43, 44 zusammen, die über elektrische Leitungen 48 von der Steuereinheit 26 angesteuert werden. Der Halter 42 ist in einem Gehäuse 45 schwenkbar gelagert, in welchem die Elektromagnete 43, 44 ebenfalls untergebracht sind. Durch Kippen des Halters 42 mit Hilfe der Elektromagnete 43, 44 bewegt sich der Lichtstrahl 47 der Lampe 41 hin und her. Er wird mittels Spiegeln 36, 37 so umgelenkt, daß er den Führungskanal 10 in Richtung seiner Tiefe als Lichtstrahlen 22 durchläuft, die bezüglich der Tiefe des Führungskanals 10 im wesentlichen parallel zueinander gerichtet sind, d.h. bei jeder Position des Halters 42 und der Lampe 41 wird ein Lichtstrahl 22 durch den Führungskanal 10 hindurch erzeugt, der im wesentlichen parallel zu jedem anderen durch den Führungskanal 10 hindurchlaufenden Lichtstrahl 22 in einer anderen Position des Halters 42 und der Lampe 41 ist. Diese Lichtstrahlen 22 bewegen sich dabei zwischen dem durch die äußeren Lichtstrahlen 22A und 22B definierten Bereich. Mittels Einstellung einer relativ hohen Kippfrequenz ergibt sich ein Effekt, bei dem als Ergebnis im wesentlichen ein kontinuierliches Feld von im wesentlichen parallelen Lichtstrahlen 22 von den lichtempfindlichen Elementen 23 empfangen werden kann.

Die Geschwindigkeit des Kippens des Halters 42 kann unter Berücksichtigung der Auslegung der Spiegel 36, 37 so gesteuert werden, daß die Lichtstrahlen 22 den Führungskanal 10 bezüglich seiner Tiefe mit nahezu gleicher Lichtstärke abtasten. Beispielsweise kann die Geschwindigkeit des Halters 42 erhöht werden, wenn der Lichtstrahl 47 der Lampe 41 auf Stellen der Spiegel 36, 37 gerichtet ist, die die Lichtstrahlen stärker konzentrieren, als wenn der Lichtstrahl der Lampe 41 auf andere Stellen der Spiegel 36, 37 gerichtet ist. Bei dem dargestellten Ausführungsbeispiel wird die Geschwindigkeit des Halters 42 deshalb, wenn er sich näher an den Elektromagneten 43, 44 befindet, relativ höher sein, als wenn er sich in der Mitte zwischen den Elektromagneten 43, 44 befindet, da die Spiegel 36, 37 in der Randnähe des Führungskanals 10 die Lichtstrahlen stärker konzentrieren als in der Mitte des Führungskanals 10. Dabei kann auch verhindert werden, daß der Lichtstrahl 47 zu den Spiegeln 36, 37 gelenkt wird, wenn sich der Halter 42 in unmittelbarer Nähe der Elektromagnete 43, 44 befindet, da dann die Geschwindigkeit des Halters 42 in diesem Augenblick zu null wird.

Unter Tiefe des Führungskanals 10 (Richtung A) wird die Querrichtung des Führungskanals 10 verstanden, die lotrecht zu den Lamellen 12 des Webblattes 2 verläuft und im wesentlichen lotrecht zu den Lichtstrahlen 22. Dadurch wird die Breitenposition oder Tiefenposition von Schußfäden 11, 32 bestimmt, d.h. die Position der Schußfäden 11, 32 in Querrichtung des Führungskanals 10.

Gemäß einer nicht dargestellten Ausführungsform der Erfindung wird die Position des oder der Schußfäden mittels zwei Schußwächtern bestimmt, deren im wesentlichen parallele Lichtstrahlen sich kreuzen. Die Position des oder der Schußfäden wird dann in zwei Richtungen bestimmt, so daß geometrisch die absolute Position des oder der Schußfäden im Führungskanal 10 bestimmt werden kann.

Aus den Diagrammen 30A, 30B, 40A, 40B kann zusätzlich zu der Position des oder der Schußfäden 11, 32 außerdem die Dicke dieser Schußfäden 11, 32 bestimmt werden, indem die Breite der Abschnitte 31, 33 bestimmt wird. Damit ist es auch möglich, mit Hilfe des Schußwächters 8 Dickenunterschiede bezüglich des oder der Schußfäden 11, 32 festzustellen.

Die Erfindung ist nicht darauf beschränkt, daß Schußfäden 11, 32 mittels Druckluft von Hauptblasdüsen 4, 5 und Hilfsblasdüsen 6 durch den Führungskanal 10 geblasen werden. Die Erfindung ist ebenso anwendbar, wenn Schußfäden auf andere Weise durch den Führungskanal 10 hindurchgefördert werden. Dies kann beispielsweise mittels Wasser von einer Hauptdüse, die entsprechend der Hauptblasdüsen 4, 5 an der Eintragsseite 3 eines Webblattes angebracht ist, oder mittels eines Projektils oder in ähnlicher Weise erfolgen.

Die Lamellen 12, 14 müssen ebenso nicht die in den Zeichnungen dargestellte Form besitzen. Beispielsweise können sie eine Form entsprechend dem US-Patent 3 853 408 aufweisen.

Bei einer nicht dargestellten Ausführungsform ist ein Schußwächter 8 zwischen dem Hilfswebblatt 9 und der Streckdüse 15 angeordnet. Ebenso ist es möglich, einen derart angeordneten Schußwächter 8 zusätzlich zu dem zwischen Webblatt 2 und Hilfswebblatt 9 vorhandenen Schußwächter 8 vorzusehen.

Es ist auch ohne weiteres möglich, einen Schußwächter 8 nicht auf der Weblade 1 zu montieren, sondern stationär auf einem nicht dargestellten Rahmen der Webmaschine anzuordnen. In diesem Fall ist es allerdings notwendig, daß der Schußwächter 8 so angeordnet ist, daß er in der annähernd hintersten Stellung der Weblade 1, d.h. wenn das Webblatt weit von dem Warenrand entfernt ist und ein Schußfaden 11, 32 in den Führungskanal 10 eingebracht wird, der Führungskanal 10 und der Schußwächter 8 im wesentlichen miteinander fluchten.

Ein Schußwächter 8 kann außer einem Prisma 18 und/oder Spiegeln 20, 21 zusätzlich eine oder mehrere Linsen enthalten, um Lichtstrahlen 22 zu erzeugen, die im wesentlichen parallel durch den Führungskanal 10 hindurch gerichtet sind.

Selbstverständlich liegen Abwandlungen des geschilderten Verfahrens und/oder der Ausführungsbeispiele von Schußwächtern im Rahmen des Könnens des Fachmannes, ohne daß dadurch der Schutzbereich verlassen wird, der ausschließlich durch die beigefügten Patentansprüche bestimmt wird.

## Patentansprüche

1. Verfahren zum optischen Überwachen von Schussfäden (11, 32) beim Eintragen in einen Führungskanal (10) mit quer zu dem Führungskanal (10) auf eine Vielzahl lichtempfindlicher Elemente (23) gerichteten, im wesentlichen zueinander parallelen Lichtstrahlen (22), wobei die Unterbrechung der Lichtstrahlen durch Schussfäden (11, 32) erfasst wird,
**dadurch gekennzeichnet, dass**
die Signale mehrerer Elemente (23) ausgewertet werden, um die Position von wengistens einem Schussfaden (11, 32), die dieser im Führungskanal (10) beim Eintragen hat, zu erfassen.

2. Verfahren nach Anspruch 1, **dadurch gekennzeichnet, daß** bei einem gleichzeitigen Eintragen von zwei oder mehr Schußfäden (11, 32) die Position aller Schußfäden und damit das Vorhandensein aller Schußfäden erfaßt wird.

3. Verfahren nach Anspruch 1 oder 2, **dadurch gekennzeichnet, daß** die Position von Schußfäden (11, 32) zweifach oder mehrfach hintereinander während eines Eintragens erfaßt werden.

4. Verfahren nach Anspruch 2 oder 3, **dadurch gekennzeichnet, daß** bei einem gleichzeitigen Eintragen von zwei oder mehr Schußfäden (11, 32) die Signale der lichtempfindlichen Elemente (23) darauf überprüft werden, ob zwei oder mehr Abschnitte (31, 33) vorhanden sind, in denen das jeweils empfangene Signal schwächer als das Signal dieser Elemente ist, das bei fehlendem Schußfaden abgegeben wird.

5. Verfahren nach einem der Ansprüche 1 bis 4, **dadurch gekennzeichnet, daß** die Position von Schußfäden (11, 32) während eines Eintragens und/oder Änderungen der Position von Schußfäden zur Anzeige gebracht und/oder aufgezeichnet werden.

6. Schusswächter für eine Webmaschine mit Mitteln zum Erzeugen von Lichtstrahlen (22), die im wesentlichen parallel zueinander quer durch einen Führungskanal (10) hindurch auf eine Vielzahl von lichtempfindlichen Elemente (23) gerichtet sind, die an eine Auswerteeinrichtung (29) angeschlossen sind, zum Durchführen des Verfahrens nach einem der Ansprüche 1 bis 4, **dadurch gekennzeichnet, dass** die Auswerteeinrichtung (29) Mittel zum Bestimmen der Position wenigstens eines Schussfadens aufgrund der Signale mehrerer Elemente (23) enthält, die der Schussfaden (11, 32) beim Eintragen in dem Führungskanal (10) hat.

7. Schußwächter nach Anspruch 6, **dadurch gekennzeichnet, daß** die Auswerteeinrichtung (29) Mittel zum Erfassen von Änderungen der Position von Schußfäden (11, 32) enthalten.

8. Schußwächter nach Anspruch 6 oder 7, **dadurch gekennzeichnet, daß** an die Auswerteeinrichtung (29) ein die Position von Schußfäden (11, 32) im Führungskanal (10) anzeigendes Anzeigegerät (55) und/oder eine die Position von Schußfäden aufzeichnendes Aufzeichnungsgerät angeschlossen ist.

9. Schußwächter nach einem der Ansprüche 6 bis 8, **dadurch gekennzeichnet, daß** die Mittel zum Erzeugen von im wesentlichen parallelen Lichtstrahlen (22) Umlenkelemente (18, 20, 21; 36, 37) enthalten, die die Lichtstrahlen (22) quer zu dem Führungskanal (10) derart verteilen, daß die Lichtstärke quer zum Führungskanal annähernd gleich ist.

10. Schußwächter nach einem der Ansprüche 6 bis 8, **dadurch gekennzeichnet, daß** Mittel (41) zum Erzeugen eines gebündelten Lichtstrahls und Mittel (42, 43, 44) zum Erzeugen einer hin- und hergehenden, den Führungskanal (10) in Querrichtung abtastenden Bewegung des Lichtstrahls (47) vorgesehen sind.

## Claims

1. Method for optically monitoring fillings (11, 32) when inserted in a guide duct (10) with substantially collimated light rays (22) directed transversely to the guide duct (10) onto a number of photosensitive elements (23), whereby the interruption of the light rays by fillings (11, 32) is detected, **characterised in that** the signals of several elements (23) are processed to determine the position of at least one filling (11, 32) which it has during insertion in the guide duct (10).

2. Method as in claim 1, **characterised in that** during simultaneous insertion of two or more fillings (11, 32) the position of all fillings and hence the presence of all fillings is detected.

3. Method as in claim 1 or 2, **characterised in that** the position of fillings (11, 32) is detected consecutively twice or more during one insertion.

4. Method as in claim 2 or 3, **characterised in that** during simultaneous insertion of two or more fillings (11, 32), the signals of the photosensitive elements (23) are examined for the presence of two or more segments (31, 33) wherein the particular received signal is weaker than the signal of this element that is produced in the case of an absent filling.

5. Method as in one of the claims 1 through 4, **characterised in that** the position of fillings (11, 32) during an insertion and/or changes in the position of fillings are displayed and/or recorded.

6. Filling detector for a weaving machine with means for generating substantially collimated light rays (22) that are directed transversely through a guide duct (10) onto a number of photosensitive elements (23), that are connected to an analyser (29), for implementing the method as in one of the claims 1 through 4, **characterised in that** the analyser (29) contains means for determining the position of at least one filling based on the signals of several elements (23), that the filling (11, 32) has during insertion in the guide duct (10).

7. Filling detector as in claim 6, **characterised in that** the analyser (29) contains means for detecting changes in the position of fillings (11, 32).

8. Filling detector as in claim 6 or 7, **characterised in that** a display (55) that displays the position of fillings (11, 32) in the guide duct (10) and/or a recorder that records the position of fillings is connected to the analyser (29).

9. Filling detector as in one of the claims 6 through 8, **characterised in that** the means for generating substantially collimated light rays (22) contain deflecting elements (18, 20, 21; 36, 37) that spread the light rays (22) transversely to the guide duct (10), in such a manner that the light intensity transversely to the guide duct is approximately constant.

10. Filling detector as in one of the claims 6 through 8, **characterised in that** means (41) for generating a focussed light ray and means (42, 43, 44) for generating a reciprocating motion of the light ray (47) transversely scanning the guide duct (10) are provided.

## Revendications

1. Procédé de contrôle optique de fils de trame (11, 32) lors de l'insertion dans un canal de guidage (10) avec des rayons de lumière (22) sensiblement parallèles les uns aux autres, dirigés transversalement au canal de guidage (10) sur une multitude d'éléments (23) sensibles à la lumière, où l'interruption des rayons de lumière par des fils de trame (11, 32) est détectée, **caractérisé en ce que** les signaux de plusieurs éléments (23) sont évalués pour détecter la position d'au moins un fil de trame (11, 32) que celui-ci occupe dans le canal de guidage (10) lors de l'insertion.

2. Procédé selon la revendication 1, **caractérisé en ce que** lors d'une insertion simultanée de deux fils de trame ou plus (11, 32), la position de tous les fils de trame et donc la présence de tous les fils de trame est détectée.

3. Procédé selon la revendication 1 ou 2, **caractérisé en ce que** la position de fils de trame (11, 32) est détectée deux fois ou plusieurs fois successivement pendant une insertion.

4. Procédé selon la revendication 2 ou 3, **caractérisé en ce que** lors d'une insertion simultanée de deux fils de trame ou plus (11, 32), les signaux des éléments (23) sensibles à la lumière sont examinés pour déterminer si deux ou plusieurs tronçons (31, 33) sont présents dans lesquels le signal respectivement reçu est plus faible que le signal de ces éléments qui est émis lors d'un fil de trame absent.

5. Procédé selon l'une des revendications 1 à 4,
**caractérisé en ce que** la position de fils de trame (11, 32) pendant une insertion et/ou des modifications de la position de fils de trame sont affichées et/ou enregistrées.

6. Casse-trame pour une machine à tisser avec des moyens pour produire des rayons de lumière (22) qui sont dirigés sensiblement parallèlement les uns aux autres transversalement à travers un canal de guidage (10) sur une multitude d'éléments (23) sensibles à la lumière, qui sont raccordés à une installation d'évaluation (29), pour la mise en oeuvre du procédé selon l'une des revendications 1 à 4, **caractérisé en ce que** l'installation d'évaluation (29) comporte des moyens pour déterminer la position d'au moins un fil de trame sur la base des signaux de plusieurs éléments (23) que le fil de trame (11, 32) occupe lors de l'insertion dans le canal de guidage (10).

7. Casse-trame selon la revendication 6, **caractérisé en ce que** l'installation d'évaluation (29) comporte des moyens pour détecter des modifications de la position de fils de trame (11, 32).

8. Casse-trame selon la revendication 6 ou 7, **caractérisé en ce qu'**il est raccordé à l'installation d'évaluation (29) un appareil d'affichage (55) indiquant la position de fils de trame (11, 32) dans le canal de guidage (10) et/ou un appareil d'enregistrement enregistrant la position de fils de trame.

9. Casse-trame selon l'une des revendications 6 à 8, **caractérisé en ce que** les moyens pour produire des rayons de lumière (22) sensiblement parallèles présentent des éléments de renvoi (18, 20, 21 ; 36, 37) qui répartissent les rayons de lumière (22) transversalement au canal de guidage (10) de façon que l'intensité lumineuse transversalement au canal de guidage soit approximativement uniforme.

10. Casse-trame selon l'une des revendications 6 à 8, **caractérisé en ce que** des moyens (41) sont prévus pour produire un rayon de lumière en faisceau et des moyens (42, 43, 44) pour produire un mouvement de va-et-vient du rayon de lumière (47) balayant le canal de guidage (10) dans la direction transversale.
